# EUROPEAN PATENT APPLICATION

(11) **EP 1 795 949 A1**
(43) Date of publication of application: **13.06.2007**
(21) Application number: 05759556.3
(22) Date of filing: 30.06.2005
(51) Int. Cl.: G02F 1/1333, G12B 9/08

(54) **GRADE CONTROL APPARATUS FOR DISPLAY SET USED IN TAPESTRY**

(30) Priority: 29.09.2004 CN 200420080067
(71) Applicant: Wu, Huai, Fuzhou, Fujian 350001 (CN)
(72) Inventor: Wu, Huai, Fuzhou, Fujian 350001 (CN)
(74) Representative: Freeman, Avi
(86) International application number: PCT/CN2005/000952
(87) International publication number: WO 2006/034619

(57) **Abstract**

The invention discloses an angle adjusting device for wall hang type display device, comprising a fixing bracket mounted on the wall or supporting holders; a device fastening frame, which is fixed on the back of the wall hang display device, and the fixing bracket is rotatablely connected to a lower end of the device fastening frame; a continuous angle adjusting device with one end rotatablely connected to the fixing bracket and the other end rotationally connected to the device fastening frame, which can provide a rotation resisting moment; and a balancing tension spring , with one end connected to the fixing bracket and the other end connected to the device fastening frame. In use, merely a little force is applied directly to the wall hang display device or the angle adjusting device, the precisely adjusted angle of the display device can be realized according to users need without removing the display device.

## Description

### FIELD OF THE INVENTION

The present invention relates to an angle adjusting device for a wall hang type display device, particularly to an angle adjusting device, which can precisely adjust a view angle of a wall hang type display device mounted on the wall in certain angle range if needed.

### BACKGROUND OF THE INVENTION

With the increasing development of the technology, many types of electric apparatus are designed as super-thin type so as to be hung on the wall, which makes them space saving, beautiful and useful. In the case of high-tech thin-type wall hang display devices hot sold in the market, such as Plasma Display Panel (PDP) TV, Liquid Crystal Display (LCD) TV and so on, the sizes of their screens are getting larger and larger, but the thicknesses are getting thinner and thinner, which brings users novel enjoyments.

Generally, an angle adjusting device is firstly fixed onto the wall, and then a display device is mounted on the angle adjusting device. Consequently users can adjust a view angle of the display device according to their need so that they can view pictures from the display device conveniently for a long time. A previous angle adjusting device disclosed in Chinese Patent publication No. CN2589794, with a title of ADJUSTABLE WALL HANG HOLDER FOR PDP TV, comprises a upper, a lower transoms and a left, a right securing longerons integratively attached one another, moveable longerons connected to the bottom of the fixing longerons, assembling holes provided on the moveable longerons, and pull rods connected to the moveable longerons at ends, the opposing ends of which are connected to the adjusting holes in the securing longerons by bolts. The TV can be tilted in a certain angle range by the wall hang holder described in the above-mentioned patent. However the tilted angle is determined only by the positions of the adjusting holes in the securing longerons and can not be adjusted accurately so as to meet users' need. Furthermore, when the angle of the wall hang holder is adjusted, the TV must be removed firstly, and then the pull rod is positioned into an adjusting hole desired. After adjustment, the TV is hung up again. However, it is inconvenient to disassemble the TV in that PDP TV has generally large volume and there are varied wires from its back.

Later, there appeared an angle adjusting device which can be used for precisely adjusting an angle of the display device conveniently based on users' need without removing the display device. As shown in figure 1, an angle controller disclosed in Chinese Patent publication No. CN1389753, with a title of ANGLE CONTROLLER FOR WALL HANG TYPE DISPLAY DEVICE, comprises a guiding rack, a griping carrier, a transmission pole for adjusting connection, an angle adjusting pole, and a manual angle adjusting pole. Gears of the transmission pole for adjusting the connection engage with that of the adjusting angle pole to adjust and control an angle with a force applied by the manual angle adjusting pole. As shown in figure 2, an angle adjusting device disclosed in Chinese Patent publication No. CN1389658, with a title of DEVICE FOR ADJUSTING AN ANGLE OF AN DISPLAY DEVICE AND AN CONNECTING BRACKET THEREOF, is provided with a hinge between a fixing device on the wall and a connecting device of the display device. An object of adjusting an angle of the display device is achieved by adjusting an angle of the expanded and folded hinge. Although the two patents described above can precisely adjust angle of the display device, they still have several drawbacks in use as follows:
1. Since the display device is heavy, an object of its manual adjustment can not be achieved unless a manually applied force has to be transferred into a larger adjusting stress by a manual pole which receives an outside force. 2. Their structures are much complicated, their costs are high and their suitable application scope is not wide. 3. Their thickness is rather large which is not in accordance with the present trend that the current display devices are getting thinner and thinner.

### SUMMARY OF THE INVENTION

An object of the present invention is to provide an angle adjusting device with simple structure for a wall hang type display device, onto which a force can be directly exerted without removing it, so as to precisely adjust an angle of it according to users' need.

To realize the above object, the present invention includes a fixing bracket mounted on the wall or supporting holders; a device fastening frame, which is fixed on the back of the wall hang display device, wherein the fixing bracket is rotatablely connected to a lower end of the device fastening frame; a continuous angle adjusting device with one end rotatablely connected to the fixing bracket and the other end rotationally connected to the device fastening frame, which can provide a rotation resisting moment; and a balancing tension spring , with one end connected to the fixing bracket and the other end connected to the device fastening frame.

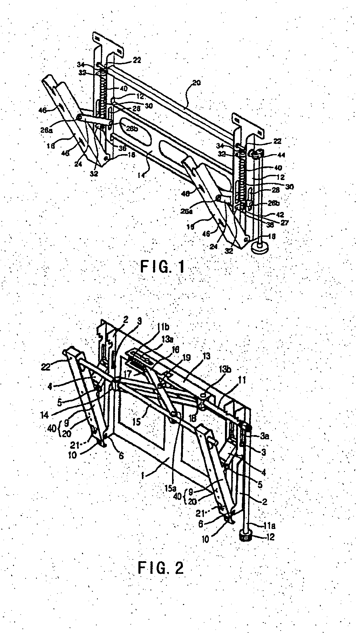

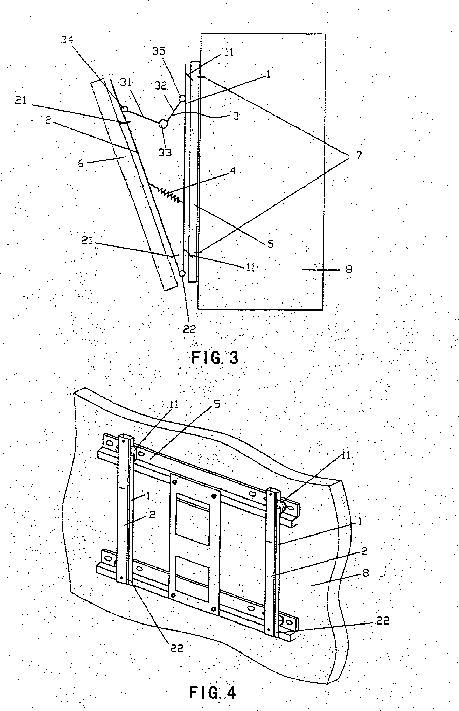

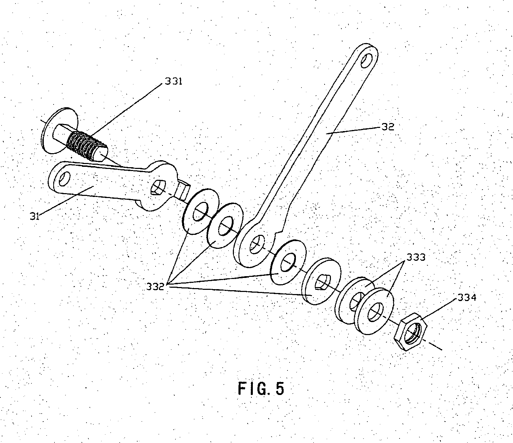

By means of the above device, when the angle adjusting device and the display device fixed thereon are tilted to a certain angle, a gravity moment of the angle adjusting device and the display device, tensile moment of the balancing tension spring and the rotation resisting moment of the continuous angle adjusting device exerted to the device fastening frame are in steady state equilibrium on a pivot of 22 shown in figure 3. When an external force applied on the wall hang display device is larger than the stress that is required to destroy the steady state equilibrium, the angle of the wall hang display device can be adjusted. The magnitude of the stress can be decided by adjusting the rotation resisting moment of the continuous angle adjusting device and the elastic coefficient and the initiative length of the balancing tension spring according to the magnitude of the weight of the wall hang display device so as to select preferable range of the required adjusting force for users. Because a tensile force of the balancing tension spring can approximately counteract the horizontally outward pull force produced by the weight of the display device, the required external force used to adjust an angle by pushing is substantively the same as that by pulling. Therefore, as long as merely a little force is applied directly to the wall hang display device or the angle adjusting device, the precisely adjusted angle of the display device can be realized according to users need without removing the display device.

In use, the continuous angle adjusting device includes two connecting rods and a hinge assembly. The connecting rods are hinged together at one end of each by a hinge assembly. The other end of one connecting rod is rotatablely connected to the fixing bracket, while the other end of the other connecting rod is rotatablely connected to the device fastening frame. The hinge assembly provides a predetermined rotation resisting moment. Commonly, the tensile force of the balancing tension spring can substantively counteract the weight of the display device and the rotation resisting moment of the hinge assembly can prevent the connecting rods from rotating. The hinge assembly can comprise a bolt, a washer, an elastic washer and a nut, and the friction forces among these members produce the rotation resisting moment.

According to a matter of fact, the rotation resisting moment of the continuous angle adjusting device and the elastic coefficient of the balancing tension spring can be set with the variety of the weight of the display device; moreover, the number of the continuous angle adjusting device can be plurality, while the number of the balancing tension spring can be one; or the former is one, while the latter is plurality; or the former is plurality, while the latter is plurality.

In conclusion, in contrast with the known devices, the present invention has following advantages:
1. Manual adjustment directly on the wall hang display device can be realized by an individual user through a very little external force that has to be exerted, even though the weight of the wall hang display device is very heavy.
2. The present invention is configured with simple structure, low cost and wide applicability, which can be widely used for hi-tech electronic products, such as PDP TV, LCDTV and so on, and can also be used for big exhibition boards, such as large size billboards, view boards and so on.
3. The entire thickness of the display device mounted on the angle adjusting device is relatively thin and accordingly its appearance is beautiful, in that the continuous angle adjusting device and the balancing tension springs can be hidden in grooves of the fixing bracket and the device fastening frame.

### BRIEF DESCRIPTION OF THE DRAWINGS

Further detailed description will be given with reference to the drawings.
FIG 1 is a perspective view of the structure disclosed in China Patent CN1389753, ANGLE CONTROLLER FOR WALL HANG TYPE DISPLAY DEVICE;
FIG 2 is a perspective view of the structure disclosed in China Patent CN1389658, DEVICE FOR ADJUSTING AN ANGLE OF AN DISPLAY DEVICE AND AN CONNECTING BRACKET THEREOF;
FIG 3 is a schematic side view according to the present invention, when it is opened;
FIG 4 is a schematic view according to the present invention, when it is closed;
FIG 5 is a perspective exploded view of the connecting rod and the hinge assembly according to the present invention.

### DETAILED DESCRIPTION OF THE PREFERED EMBODYMENTS

The invention is described below in details on the base of the drawings and embodiments.

As seen in figure 3 and 4, the angle adjusting device according to the present invention includes a fixing bracket 1, a device fastening frame 2, a continuous angle adjusting device 3 and a balancing tension spring 4. The angle fixing bracket 1 is mounted on a supporting holder 5. The device fastening frame 2 is mounted on the back of a wall hang type display device 6. The fixing bracket 1 is rotatablely connected to a lower end of the device fastening frame 2. One end of the continuous angle adjusting device 3 is rotatablely connected to an end of the fixing bracket 1 and the other end is rotatablely connected to an end of the device fastening frame 2. Accordingly the rotation of the device fastening frame 2 can be limited by the continuous angle adjusting device 3. One end of the balancing tension spring 4 is connected to the fixing bracket 1 and the other end is connected to the device fastening frame 2.

In use, a hook 11 is formed on the back of the fixing bracket 1, which can be hooked on the supporting holder 5 fixed on the wall 8 by expansion screw 7. Alternatively, the fixing bracket 1 can also be fixed directly on the wall 8.

The device fastening frame 2 is fixed on the back of the wall hang type display device 6 (e.g. PDP TV, LCD TV and so on) by setscrew 21, the lower end of which is connected to the fixing bracket and can rotate around a pin 22.

The continuous angle adjusting device 3 comprises two connecting rods 31 and 32. The connecting rods 31 and 32 are connected each other at one end by a hinge assembly 33, while the other end of each connecting rods 31 and 32 is rotatablely connected to the device fastening frame 2 and the fixing bracket 1 respectively by pivots 34, 35. As shown in figure 5, the hinge assembly 33 (generally called Hinge in the electric display field presently) includes a bolt 331, a washer 332, an elastic washer 333 and a nut 334 which are connected to the connecting rods 31 and 32 by sequence. The connecting rods 31 and 32 can rotate around the hinge point of the hinge assembly 33. A rotation resisting moment of the hinge assembly 33 can be adjusted by setting the tightness of the nuts 334, the number of the elastic washer 333, and the elastic coefficient of the elastic washer 333. A hinge with suitable rotation resisting moment should be selected according to the different weights of the wall hang type display devices 6.

One end of the balancing tension spring 4 is connected to the fixing bracket 1, while the other end is connected to the device fastening frame 2. A tensile force generated by the balancing tension spring 4 can counteract a horizontal outward force generated by the weight of the wall hang type display device 6 so that an external pulling force and an external pushing force required for adjusting an angle are substantively the same. The balancing tension spring 4 with a suitable elastic coefficient and initial length should be selected according to the different weights of the wall hang type display devices 6.

The continuous angle adjusting device 3 and the balancing tension spring 4 can be placed with respect to the position of each other on the base of users' need; for example, while the balancing tension spring 4 is in an upper position, the continuous angle adjusting device 3 is in a lower position or in the same horizontal level with that of the balancing tension spring 4.

When the angle adjusting device and the display device 6 fixed thereon are tilted to a certain angle, three of the gravity moment of the angle adjusting device and the display device 6, a tensile moment of the balancing tension spring and the rotation resisting moment that the continuous angle adjusting device provides onto the device fastening frame 2 are in steady state equilibrium on a pivot of 22 in figure 3. Aiming at different tilted angles, different corresponding stresses are required respectively to destroy the equilibrium state in three stresses. Only when an external force applied on the device is larger than the corresponding stress, can the tilted angle of the wall hang display device 6 be adjusted. At the same time, when users finish adjusting the angle, the adjusted angle can keep invariable for a long time in that there exists a minimum stress that is required to adjust angle. The magnitude of the stress can be determined by adjusting the rotation resisting moment of the continuous angle adjusting device 3 and the elastic coefficient and the initial length of the balancing tension spring 4 so as to select a suitable range of the adjusting forces required for users according to the weight of the wall hang display device 6.

The invention is provided with a maximal open angle that generally is about 20°.

As shown in figure 4, the continuous angle adjusting device and the balancing tension spring according the present invention can be hidden in the grooves of the fixing bracket and device fastening frame. Accordingly, the entire thickness is relatively thin and the appearance is beautiful.

In addition, the fixing bracket 1 and the device fastening frame 2 can be configured as one piece, frame, or combination of beams and poles according to the cost requirement. The number of the continuous angle adjusting devices 3 and the balancing tension springs 4 can be more or less if needed. For example, a plurality of the continuous adjusting angle devices 3 and one balancing tension spring 4, or a plurality of the balancing tension springs 4 and one continuous adjusting angle device 3, or a plurality of the continuous adjusting angle device 3 and a plurality of the balancing tension springs 4.

In use, the support holder 5 is firstly fixed on the wall 8; and the device fastening frame 2 is fixed onto the back of the wall hang type display device 6; and then the wall hang type display device 6 and the angle adjusting device are hooked onto the support holder 5 with the hook 11 on the back of the fixing bracket 1. Furthermore, according to users' needs, a corresponding adjusting force is directly applied on the wall hang display device 6 or the angle adjusting device thereof to adjust a view angle of the all hang type display device 6 users desire.

## Claims

1. An angle adjusting device for a wall hang display device, comprising:
a fixing bracket mounted on the wall or supporting holders;
a device fastening frame fixed on the back of the wall hang display device;
wherein the fixing bracket is rotatablely connected to a lower end of the device fastening frame;
**characterized in that** comprises a continuous angle adjusting device, which can provide a rotation resisting moment, one end of which is rotationally connected to the fixing bracket, while the other end of which is rotationally connected to the device fastening frame; and an balancing tension spring, with one end connected to the fixing bracket and the other end connected to the device fastening frame.

2. An angle adjusting device as claimed in claim 1, **characterized** further in that the continuous angle adjusting device comprises two connecting rods and a hinged assembly; the connecting rods are hinged together at one end of each by a hinge assembly; the other end of one connecting rod is rotatablely connected to the fixing bracket, while the other end of the other connecting rod is rotatablely connected to the device fastening frame; the hinge assembly provides a predetermined rotation resisting moment.

3. An angle adjusting device claimed in claim 2, **characterized** further in that the hinge assembly comprises a bolt, a washer, an elastic washer and a nut.

4. An angle adjusting device claimed in claim 1 or 2, **characterized** further in that a rotation resisting moment of the continuous angle adjusting device and an elastic coefficient of the balancing tension spring are adjusted according to the weight of the wall hang display device.

5. An angle adjusting device claimed in claim 1 or 2, **characterized** further in that the number of the continuous angle adjusting device is plurality, while that of the balancing tension spring is one; or the former is one, while the later is plurality; or the former is plurality, while the later is plurality.
